# EUROPÄISCHE PATENTSCHRIFT

(11) **EP 0 761 357 B1**
(45) Veröffentlichungstag und Bekanntmachung des Hinweises auf die Patenterteilung: **29.05.2002**
(21) Anmeldenummer: 96113057.2
(22) Anmeldetag: 14.08.1996
(51) Int. Cl.: B23F 19/05, B23F 19/06, B23F 21/03, B23F 21/28

(54) **Verfahren zum Schaben oder Schabschleifen zylindrischer, insbesondere flankenlinienmodifizierter Zahnräder bzw. zum Profilieren der zum Schabschleifen benötigten Werkzeuge**
Method for shaving or honing cylindrical gears, in particular gears with tooth flank modifications, and method for profiling gear honing tools
Procédé pour le rasage ou le honage des roues dentées cylindriques, en particulier des roues dentées ayant des flancs de dent modifiés, et procédé pour le profilage des outils de honage de roues dentées

(30) Priorität: 17.08.1995 DE 19530227
(43) Veröffentlichungstag der Anmeldung: 12.03.1997
(73) Patentinhaber: GLEASON-PFAUTER, Maschinenfabrik GmbH, 71636 Ludwigsburg (DE)
(72) Erfinder: Faulstich, Ingo Dr. Ing, D-71634 Ludwigsburg (DE)
(74) Vertreter: Jackisch-Kohl, Anna-Katharina

(56) Entgegenhaltungen:
- DE-A- 3 142 843
- DE-C- 3 823 560
- GB-A- 655 672
- US-A- 4 077 164
- US-A- 5 092 720
- PATENT ABSTRACTS OF JAPAN vol. 002, no. 146 (M-042), 6.Dezember 1978 & JP 53 115995 A (KAWASAKI JUKOGYO KK), 9.Oktober 1978,

## Beschreibung

Die Erfindung betrifft ein Verfahren zum Schaben oder Schabschleifen der Zahnflanken zylindrischer, insbesondere flankenlinienmodifizierter Zahnräder bzw. zum Profilieren der zum Schabschleifen benötigten Werkzeuge nach dem Oberbegriff des Anspruches 1 bzw. 2.

Beim Schaben oder Schabschleifen von zylindrischen, insbesondere von flankenlinienmodifizierten Zahnrädern, werden die Zahnräder mit innen- oder außenverzahnten Werkzeugen bearbeitet. Während der Bearbeitung der Werkstückzahnräder werden die Werkzeug- und die Werkstückzahnräder um ihre jeweiligen Achsen gedreht. Sie sind auf einen bestimmten Achsabstand und einen bestimmten Kreuzungswinkel eingestellt. Während der Bearbeitung wird über geeignete Bewegungen das Werkstückzahnrad am Teilkörper des Werkzeugzahnrades so vorbeigeführt, daß sich die aktiven Bereiche von Werkzeugund Werkstückzahnrad über die Breite des Werkstückzahnrades und gegebenenfalls des Werkzeugzahnrades vollständig einhüllen. Dabei spielt es keine Rolle, ob das Werkstückzahnrad, das Werkzeugzahnrad oder beide Zahnräder einen Teil dieser Relativbewegung ausführen. Neben der gegenseitigen Einhüllung der Teilkörper 0 und 1, 2 über die entsprechenden Breiten ist in jedem Kontaktpunkt sicherzustellen, daß die Tangenten an die im Werkzeugzahnrad vorhandenen und die am Werkstückzahnrad geforderten Flankenlinien gleiche Richtung haben. Diese Zusatzforderung läßt sich näherungsweise über entsprechende Korrekturbewegungen während der Bearbeitung erfüllen. Bei dem hier beschriebenen Verfahren tritt das Problem auf, daß die nach der Vorbearbeitung der Werkstückzahnräder vorhandenen geometrischen Abweichungen nicht weit genug reduziert werden, die Werkstücke also eine schlechte Verzahnungsqualität aufweisen, oder ein zu großer Werkzeugverschleiß auftritt, der zu hohen Werkzeugkosten und ebenfalls zu einer schlechten Verzahnungsqualität führt.

In anderen Anwendungsfällen ergeben sich Probleme dadurch, daß die räumlichen Verhältnisse nur einen stark eingeschränkten Oszillationshub zulassen (Schulterarbeit). Zur Bearbeitung sind dann betragsmäßig kleine Achskreuzwinkel erforderlich; dies bedeuten ungünstige Arbeitsbedingungen, schlechten Abtrag, schlechte Verzahnungsqualität.

Aus der DE 43 29 358 C1 ist ein sogenannter Spheric-Prozeß bekannt, bei dem neben den Drehachsen von Werkzeug und Werkstück drei senkrecht zueinander angeordnete Linearachsen und eine Schwenkachse zur Verfügung stehen. Das Werkzeug und das Werkstück können sich gegenseitig über einen bestimmten Anteil ihrer Breite, gegebenenfalls auch über ihre gesamte Breite einhüllen. Diese Vorgehensweise ist jedoch ausschließlich bei Verfahren möglich, bei denen drei Linear- und mindestens eine Schwenkachse vorhanden sind.

Es sind auch Schabmaschinen bekannt, die mit drei Linear- und mindestens einer Schwenkachse arbeiten (GB 655 672 A). Dies sind Maschinen, die u.a. zum Quer- und Diagonalschaben eingesetzt werden. Vom Quer- und Diagonalschaben ist es bekannt, daß nicht nur das Werkstück vom Werkzeug, sondern auch das Werkzeug vom Werkstück über seine Breite voll eingehüllt werden. Aber auch hier sind Maschinen mit drei Linearachsen und mindestens einer Schwenkachse erforderlich.

Der Erfindung liegt die Aufgabe zugrunde, die gattungsgemäßen Verfahren so auszubilden, daß sich günstigere Verhältnisse als bisher bezüglich Verzahnungsqualität ergeben.

Diese Aufgabe wird bei den gattungsgemäßen Verfahren erfindungsgemäß mit den kennzeichnenden Merkmalen der Ansprüche 1 bzw. 2 gelöst.

Beim erfindungsgemäßen Verfahren gemäß Anspruch 1 können auch bei Maschinen mit zwei Linearachsen und zwei Schwenkachsen bestimmten, durch Stirnschnitte definierten Breitenbereichen der Werkstück- bzw. Abrichtrad-Zahnradflanken für den Bearbeitungs- bzw. Abrichtvorgang bestimmte, ebenfalls durch Stirnschnitte definierte Breitenbereiche der Werkzeugzahnradflanken gezielt zugeordnet werden in dem Sinne, daß auch die Werkzeugzahnradflanken von den Werkstück- bzw. Abrichtzahnradflanken vollständig eingehüllt werden. Die Kontaktzone zwischen den Werkzeugen und den Werkstücken wandert in Richtung der Werkzeugachse. Dadurch können auch Partien zur Bearbeitung genutzt werden, die bei bekannten Verfahren mit zwei Linear- und zwei Schwenkachsen nicht zur Bearbeitung herangezogen werden können.

Beim Verfahren nach Anspruch 1 ist es möglich, nahezu ohne Bewegung des Axialschlittens, mit dem das Werkstückzahnrad in Richtung seiner Drehachse verschoben wird, den Kontaktpunkt zwischen Werkstück- und Werkzeugzahnrad über die gesamte Breite des Werkstückzahnrades wandern zu lassen. Die gesuchte Zuordnung der Stirnschnitte wird iterativ bestimmt. Für jedes der Stirnschnittpaare werden die erforderlichen Verschiebungen der Stützpunkte zur Ermittlung der von der Maschine auszuführenden Bahn herangezogen und zur Erstellung des Maschinenprogramms benutzt. Unter Berücksichtigung der am Werkzeugzahnrad aktiven Stirnschnitte läßt sich eine sinnvolle Werkzeugbreite festlegen.

Beim erfindungsgemäßen Verfahren gemäß Anspruch 2 ist für Bereiche der Werkstückzahnflanken, bei deren Bearbeitung erhöhter Werkzeugverschleiß zu erwarten ist, ein größerer Anteil an Bearbeitungsfläche der Werkzeugzahnradflanken vorgesehen als für die übrigen Bereiche bzw. für Bereiche der Werkzeugzahnflanken, bei denen beim Abrichten erhöhter Abrichtradverschleiß zu erwarten ist, ein größerer Anteil an Bearbeitungsfläche der Abrichtradzahnflanken vorgesehen ist als für die übrigen Bereiche. Die Zuordnung der Breitenbereiche von Werkzeug und Werkstück für den Bearbeitungsvorgang wird nicht nur mit dem Ziel vorgenommen, daß sich beide Elemente gegebenenfalls über ihre gesamte Breite gegenseitig einhüllen und Sekundärschnitte vermieden werden, sondern mit dem zusätzlichen Ziel, daß Bereichen der Werkstückbreite, bei deren Bearbeitung erhöhter Werkzeugverschleiß zu erwarten ist, mehr Schneidstoff zur Verfügung gestellt wird. Dadurch wird ein Verschleiß des Werkzeugzahnrades angenähert gleichmäßig über die Werkzeugbreite verteilt und der maximale Verschleiß klein gehalten. Die Werkzeugkosten bleiben dadurch niedrig. Außerdem wird eine hohe Verzahnungsqualität erzielt.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1a: den Teilkörper eines Schleifringes, der von innen konkav ausgebildet ist,
- Fig. 1b: den Teilkörper eines Schleifringes, der von innen konvex ausgebildet ist,
- Fig. 1c: den Teilkörper eines Werkstückes oder eines Abrichtrades ohne Flankenlinienmodifikation,
- Fig. 1d: den Teilkörper eines Werkstückes oder eines Abrichtrades mit einer Flankenlinienmodifikation in Form einer Breitenballigkeit,
- Fig. 1e: den Teilkörper eines außenverzahnten Werkzeuges,
- Fig. 2: drei verschiedene Stellungen des Werkstückes bzw. Abrichtrades relativ zum Werkzeug während der Bearbeitung des Werkstückes durch das Werkzeug bzw. während der Profilierung des Werkzeuges durch ein Abrichtrad,
- Fig. 3: in schematischer Darstellung eine Ausführung des Verfahrens gemäß Fig. 2 mit geänderter Stirnschnittzuordnung,
- Fig. 4: die Zuordnung der aktiven Bereiche des Werkzeuges zu denen des zu bearbeitenden Werkstückes bzw. die Zuordnung der aktiven Bereiche des Werkzeuges zu denen des Abrichtrades gemäß dem Stand der Technik,
- Fig. 5: in vereinfachter Darstellung die Zuordnung der aktiven Bereiche des Werkzeuges zu denen des Werkstückes bei Durchführung des erfindungsgemäßen Verfahrens,
- Fig. 6: eine Skizze zur Erläuterung der quantitativen Zuordnung der aktiven Bereiche des Werkzeuges zu denen des Werkstückes bei Durchführung des erfindungsgemäßen Verfahrens.

Das im folgenden beschriebene Verfahren dient zum Schaben oder Schabschleifen zylindrischer, insbesondere flankenlinienmodifizierter Zahnräder. Mit diesem Verfahren können auch zum Schabschleifen benötigte Werkzeuge profiliert werden. Diese Verfahren können mit innenoder außenverzahnten Werkzeugen durchgeführt werden.

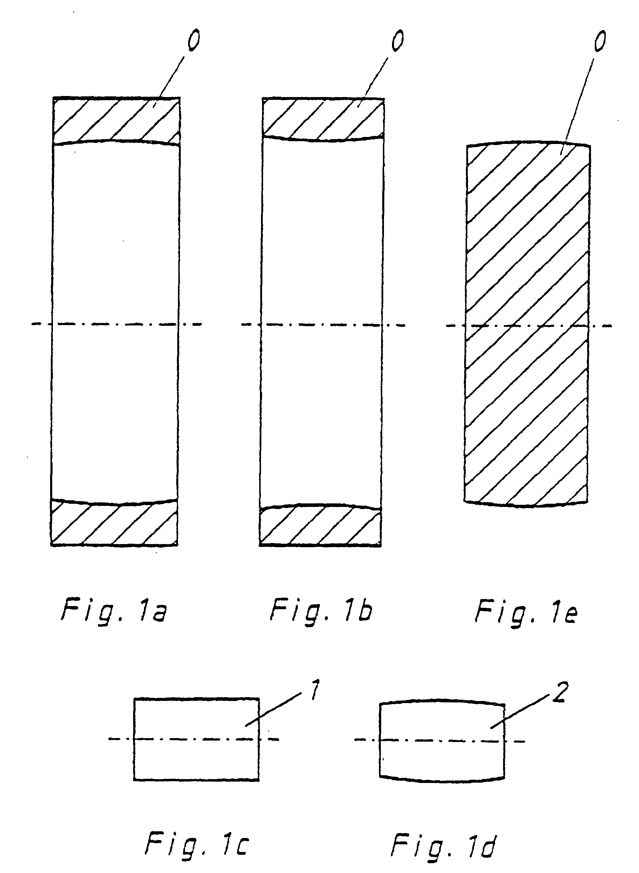

Die Fig. 1a bis ld zeigen anhand von Beispielen Teilkörper von Schleifringen 0 (Fig. 1a und 1b), die von innen konkav (Fig. la) oder von innen konvex (Fig. 1b) ausgebildet sind. Mit diesen innenverzahnten Schleifringen 0 werden die Werkstücke 1, 2 (Fig. 1c und 1d) bearbeitet.

Anstelle eines innenverzahnten Schleifringes kann auch ein außenverzahntes Werkzeug 0 (Schab- oder Schabschleifrad), wie Fig. le zeigt, herangezogen werden.

Die Teilkörper 1, 2 können auch zu Abrichträdern gehören, mit denen die Werkzeuge 0 profiliert werden, sofern die Werkzeuge abrichtbar sind. Im folgenden wird jedoch davon ausgegangen, daß die Teilkörper 1, 2 Werkstücken entsprechen.

Während der Bearbeitung der Werkstücke werden das Werkzeug 0 und das Werkstück 1 bzw. 2 um ihre jeweiligen Achsen gedreht. Diese Achsen sind auf einen bestimmten Achsabstand und einen bestimmten Kreuzungswinkel eingestellt. Das Werkstück 1, 2 wird während der Bearbeitung über geeignete Bewegungen am Teilkörper des Werkzeuges 0 so vorbeigeführt, daß sich die aktiven Bereiche von Werkzeug 0 und Werkstück 1 bzw. 2 über die Breite des Werkstückes 1, 2 und des Werkzeuges 0 nacheinander vollständig einhüllen. Auf diese Weise wird das Werkstück 1, 2 über seine Breite vollständig bearbeitet. Die hierzu erforderlichen Bewegungen werden über eine entsprechende Steuerung der Maschine vollautomatisch ausgeführt.

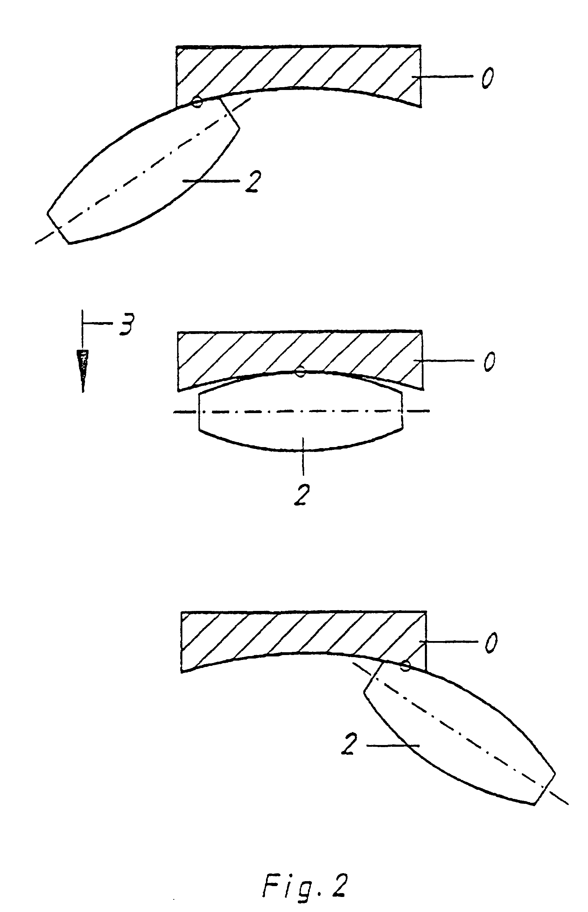

Für das Verständnis des im folgenden zu beschreibenden Verfahrens reicht eine Betrachtung an einem stark vereinfachten Modell aus. Anstelle der verzahnten Elemente Werkzeug 0, Werkstück 1, 2 bzw. Abrichtrad enthält dieses Modell lediglich die Teilkörper dieser Elemente, wie sie in den Fig. 1a bis le zu erkennen sind, in einer ebenen Darstellung. Die am Werkstück bzw. Abrichtrad vorhandenen Flankenlinienmodifikationen in Form einer Breitenballigkeit sind auf den Axialschnitt umgerechnet und stark vergrößert dargestellt. Ferner ist in dem Modell unterstellt, daß sich die Teilkörper von Werkstück bzw. Abrichtrad und Ring in der Axialschnittebene des Werkstückes bzw. Abrichtrades berühren. Die bei Anwendung der herkömmlichen Verfahren gegebenenfalls vorgesehene Anpassung des Schwenkwinkels an die Richtung der Flankenlinien von Werkzeug 0 und Werkstück 1, 2 im Kontaktpunkt ist für das Verständnis des vorgeschlagenen Verfahrens nicht erforderlich und deshalb in den Skizzen nicht berücksichtigt. Unberücksichtigt ist aus demselben Grunde auch die Drehung von Werkzeug bzw. Werkstück um ihre jeweilige Drehachse. Während der Bearbeitung wird zum Beispiel der tonnenförmige Teilkörper des Werkstükkes 2 gemäß Fig. ld so an dem Teilkörper des Schleifringes, der entsprechend den Fig. 1a, 1b oder le ausgebildet sein kann, vorbeigeführt, daß der Kontaktpunkt zwischen Werkstück 2 und Werkzeug 0 über nahezu die gesamte Breite des Werkstückes 2 und gegebenenfalls auch des Werkzeuges 0 wandert und so das Werkstück 2 über seine gesamte Breite bearbeitet wird. Üblicherweise führt das Werkstück 2 der Zustellbewegung des Werkzeuges (Pfeil 3 in Fig. 2) überlagert eine Oszillationsbewegung aus, diese besitzt eine wesentliche Bewegungskomponente in Achsrichtung des Werkstückes 2. Die Strecken, die in Achsrichtung des Werkzeuges 0 und des tonnenförmigen Teilkörpers 2 aktiv sein sollen, werden erfindungsgemäß im Bearbeitungsprogramm (NC-Programm der Maschine) berücksichtigt.

Die Körper bewegen sich, abgesehen von den Bereichen in der Nähe der Umsteuerpunkte, an denen die Oszillationsbewegung umgekehrt wird, mit konstanter oder zumindest näherungsweise konstanter Relativgeschwindigkeit. Damit steht bei einer festen Vorschubgeschwindigkeit zur Bearbeitung eines bestimmten Bereiches am Werkstück 2 ein fest zugeordneter Bereich am Werkzeug 0 zur Verfügung.

Nun ist über der Breite des Werkstückes 2 nicht an allen Stellen gleich viel Material abzutragen, zum Beispiel weil bestimmte Modifikationen erzeugt werden sollen, vor allem aber, weil die zu bearbeitenden Werkstücke unter Umständen große Flankenlinienabweichungen aufweisen. Es zeigt sich, daß in der Serienfertigung bestimmte Abweichungen systematisch auftreten, zum Beispiel bei Werkstücken, die nach dem Härten bearbeitet werden sollen. Es ist deshalb möglich, gezielt Maßnahmen zur Verbesserung der Werkstückqualität anzuwenden.

Bei den herkömmlichen Verfahren geschieht dies dadurch, daß beispielsweise die Anzahl der Hübe erhöht oder die zu erwartenden Verzahnungsabweichungen durch entsprechende Manipulation des Teilkörpers (Vorhalt) vorgenommen werden. Diese Verfahren haben aber den Nachteil, daß das Werkzeug an bestimmten Stellen schnell verschleißt und demzufolge die Verzahnungsqualität der nacheinander bearbeiteten Werkstücke schnell abnimmt.

Bei dem neuen Verfahren wird ein neuer Weg vorgeschlagen. Das Problem läßt sich dadurch überraschend einfach beherrschen. Das Verfahren geht von der Erkenntnis aus, daß an den Stellen, an denen mehr Material als an anderen abgetragen werden muß, auch mehr Schneidstoff am Werkzeug 0 zur Verfügung gestellt werden sollte.

Der Wunsch, an bestimmten Stellen einer Bearbeitung mehr Schneidstoff zur Verfügung zu haben, muß nicht aus dem über der Werkstückbreite unterschiedlich großen Aufmaß resultieren. Zum Beispiel ist bekannt, daß viele Werkstücke feinbearbeitet werden müssen, die an einer oder beiden Stirnseiten noch einen Grat (Primär-/Sekundärgrat) besitzen oder lediglich nahe den Stirnflächen eine größere Härte als im übrigen Bereich der Flanken aufweisen. Diese Partien lassen sich zwar oft geometrisch zufriedenstellend bei den herkömmlichen Verfahren bearbeiten, es tritt jedoch lokal ein sehr hoher Werkzeugverschleiß und demzufolge eine schlechte Verzahnungsqualität auf.

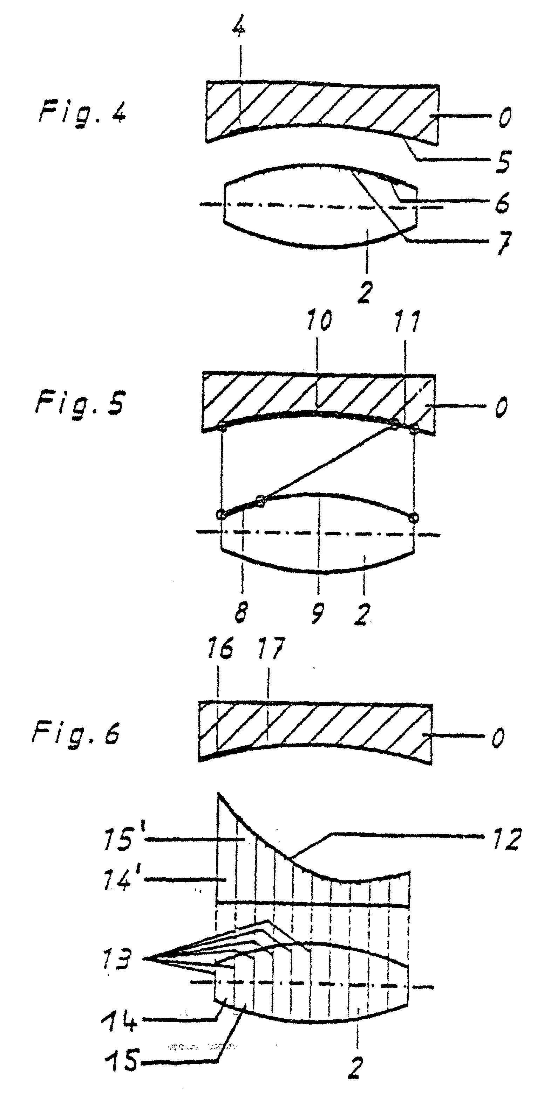

Bei dem neuen Verfahren wird unabhängig von der Ursache für das Entstehen von Werkzeugverschleiß, zum Beispiel aufgrund von Probebearbeitungen, festgelegt, an welchen Stellen des Werkstückes mehr Schneidstoff zur Verfügung gestellt werden muß. Eine Manipulation des Teilkörpers des Werkstückes ist somit nicht mehr erforderlich, obwohl eine solche Maßnahme parallel zum vorgeschlagenen Verfahren auch vorgenommen werden kann. Die Unterschiede in dieser Vorgehensweise zwischen dem herkömmlichen Verfahren und dem neuen Verfahren sollen anhand der Fig. 4 bis 6 näher erläutert werden. Beim Verfahren (Fig. 4) ergibt sich die Situation, daß untereinander jeweils gleich große Streckenelemente 4 der aktiven Fläche 5 des Werkzeuges 0 jeweils zueinander ebenfalls gleich große Streckenelementen 6 des aktiven Bereiches 7 des Werkstückes 2 zugeordnet werden. Bei der Drehung der Teilkörper ergeben sich aus diesen Strecken am Werkzeug entsprechende mit Schneidstoff versehene Arbeitsflächen. Dies gilt nicht nur für das vereinfachte Modell, sondern prinzipiell auch für das tatsächlich eingesetzte verzahnte Werkzeug.

Beim neuen Verfahren wird für die Bereiche, in denen mehr Material am Werkstück 2 abzutragen ist, am Werkzeug entsprechend mehr Schneidstoff zur Verfügung gestellt. So sind in Fig. 5 den Flächen 8 und 9 des Werkstückes 2 die entsprechenden Flächen 10 bzw. 11 des Werkzeuges 0 zugeordnet. Da im Bereich 8 des Werkstückes 2 zum Beispiel mehr Material abgetragen werden muß als im Bereich 9, steht im Bereich 10 des Werkzeuges 0 offensichtlich mehr Schneidstoff zur Verfügung als im Bereich 11.

Die konkrete Vorgehensweise bei der Anwendung des Verfahrens soll nun anhand der Fig. 6 näher erläutert werden. Am anschaulichsten läßt sich das Verfahren dahingehend beschreiben, daß über die Breite des Werkstückes 2 unterschiedlich viel Material abgetragen werden soll. Dieser Materialabtrag über die Breite des Werkstückes 2 wird durch die Kurve 12 charakterisiert. Über die Breite des Werkstückes werden Stirnschnitte gelegt, die gleichen Abstand voneinander haben und demzufolge gleich große Breitenbereiche festlegen. In Fig. 6 ist eine Anzahl von Stirnschnitten 13 eingezeichnet. Zwei benachbarte Stirnschnitte begrenzen ein Flächenelement 14 des Werkstück-Teilkörpers bzw. ein Flächenelement 14' in dem im mittleren Teil der Fig. 6 dargestellten Diagramm. Die mittlere Höhe des Elementes 14' wird proportional zu dem in diesem Bereich abzutragenden Werkstoffvolumen gewählt. Auf diese Weise werden die Ordinatenwerte aller Flächenelemente ermittelt und anschließend addiert. Diese Summe entspricht dem Gesamtvolumen des abzutragenden Materials am Werkstück 2. Es wird im Beispiel angenommen, daß die Summe der Ordinaten den Wert 113 ergibt. Ferner wird angenommen, daß das Werkzeug 0 eine aktive Breite von 60 mm hat. Diese Breite von 60 mm wird nun in 113 Inkremente unterteilt. Es wird im Beispiel angenommen, daß dem Flächenelement 14 ein Ordinatenwert von 24 und dem Flächenelement 15 ein Ordinatenwert von 19 zugeordnet ist. Dementsprechend wird im aktiven Bereich des Werkzeuges 0 dem Flächenelement 14 des Werkstückes das Flächenelement 16 zugeordnet, dessen Breite 24 Inkrementen der aktiven Werkzeugbreite entspricht. Dem Flächenelement 15 des Werkstückes wird das Flächenelement 17 am Werkzeug zugeordnet, dessen Breite dementsprechend 19 Inkrementen der aktiven Werkzeugbreite gleich ist. Dieses Verfahren wird für sämtliche Flächenelemente durchgeführt. Da am Flächenelement 14 mehr Material abgetragen werden soll, steht am Werkzeug 0 im aktiven Bereich im Flächenbereich 16 mehr Schneidstoff zur Verfügung als im Werkzeugbereich 17, mit dem das Flächenelement 15 bearbeitet werden soll. Aufgrund dieser Zuordnung der Stirnschnitte von Werkzeug und Werkstück ergeben sich eindeutige Bewegungsbahnen, die das Werkstück relativ zum Werkzeug auszuführen hat.

Im beschriebenen Ausführungsbeispiel ist davon ausgegangen worden, daß am Werkstück 2 unterschiedliche Werkstoffvolumina je Element der Werkstückbreite abgetragen werden sollen. Das Verfahren ist hierauf jedoch nicht beschränkt. Der Wunsch, am Werkzeug in bestimmten Bereichen mehr Schneidstoff zur Verfügung zu stellen, kann sich auch daraus ergeben, daß am Werkstück beispielsweise an der Stirnseite eine höhere Härte vorhanden ist als im mittleren Bereich, so daß zur Bearbeitung des härteren Bereiches am Werkzeug entsprechend mehr Schneidstoff wünschenswert ist. Es können beliebige Gründe dafür sprechen, bestimmten Werkstückpartien unterschiedlich viel Schneidstoff zur Verfügung zu stellen.

Das vorgeschlagene Verfahren ist auch anwendbar bei Verfahren, die üblicherweise als Verfahren mit Linienkontakt bezeichnet werden. Bei diesen Verfahren tritt aufgrund der zu Beginn der Bearbeitung vorhandenen Flankenlinienabweichungen zunächst Punktkontakt auf, der mit den beschriebenen Mitteln angegangen werden kann.

Das beschriebene Verfahren kann dahingehend weiterentwickelt werden, daß über geeignete Sensoren, die an sich bekannt sind, während der Bearbeitung Informationen über die gewünschte bzw. erforderliche Schneidstoffverteilung im aktiven Bereich des Werkzeuges erhalten werden. Diese Informationen können nach der Bearbeitung eines Probewerkstückes in entsprechende Bewegungsbahnen umgesetzt werden. Es ist aber auch möglich, quasi online derartige Informationen auszuwerten, eine neue Bahn zu berechnen und während der Bearbeitung auf die neue Bahn umzuschalten. Dies kann beispielsweise am Ende eines Oszillationshubes erfolgen.

Anstelle des Werkstückes 1, 2 kann auch ein Abrichtrad 1 bzw. 2 eingesetzt werden, mit dem das Werkzeug 0 profiliert wird. Das Verfahren wird insbesondere bei der Erstprofilierung des Werkzeuges 0 bzw. bei einem eventuell erforderlichen Umprofilieren des Werkzeuges 0 angewendet.

Das beschriebene Bearbeitungsverfahren ist nicht nur beim Einsatz von abrichtbaren Werkzeugen 0, sondern auch bei Einsatz nicht abrichtbarer Werkzeuge anwendbar.

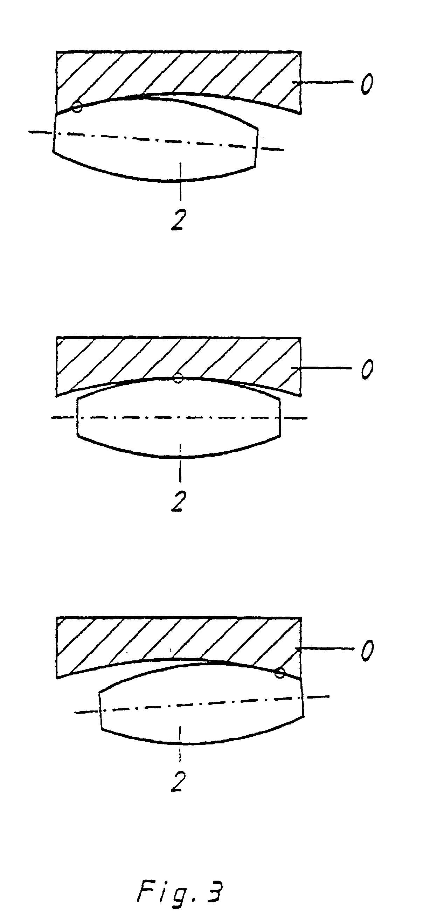

In Fig. 2 wird der rechte Teil des Werkstückes vom linken Teil des Werkzeuges 0 und der linke Teil des Werkstückes 2 vom rechten Teil des Werkzeuges 0 bearbeitet. Im Gegensatz dazu wird in Fig. 3 der linke Teil des Werkstückes 2 vom linken Teil des Werkzeuges 0 und entsprechend der rechte Teil des Werkstückes 2 vom rechten Teil des Werkzeuges 0 bearbeitet.

Ein Vergleich der Fig. 2 und 3 zeigt, daß es offensichtlich möglich ist, Stirnschnittzuordnungen zu wählen, bei denen der Kontaktpunkt zwischen Werkzeug 0 und Werkstück 2 über die gesamte Werkstück- und gegebenenfalls die gesamte Werkzeugbreite wandert und so eine Bearbeitung des Werkstückes über die volle Breite sicherstellt, bei denen die gleiche "Schneidstoffmenge" zur Bearbeitung genutzt wird, bei denen aber erheblich unterschiedliche Wege in Richtung der Werkstückachse erforderlich sind.

Beim beschriebenen Verfahren zum Schaben oder Schabschleifen der Zahnflanken von zylindrischen, insbesondere flankenlinienmodifizierten Zahnrädern bzw. zum Profilieren der zum Schabschleifen benötigten Werkzeuge werden zum Bearbeiten der Werkstückzahnräder zahnradförmige Werkzeuge mit definierter Schneide (Schabrad) oder mit nicht definierter Schneide (Schabschleifrad, außen- oder innenverzahnt) und bei dem zum Profilieren der für das Schabschleifen benötigten Werkzeugzahnräder zahnradförmige Abrichträder eingesetzt. Werkzeug- und Werkstückzahnrad wälzen hierbei in Flankenkontakt miteinander, wobei die Achsen von Werkzeug- und Werkstückzahnrad in der Ausgangslage auf einen bestimmten Achsabstand und einen bestimmten Achskreuzwinkel eingestellt werden. Zwischen dem Werkstück- und dem Werkzeugzahnrad werden solche Relativbewegungen ausgeführt, daß die Werkzeugzahnradflanken die Werkstückzahnradflanken nacheinander vollständig einhüllen. Hierbei werden in der beschriebenen Weise in bestimmten, durch Stirnschnitte definierten Breitenbereichen der Werkstück- bzw. Abrichtrad-Zahnradflanken für den Bearbeitungs- bzw. Abrichtvorgang bestimmte, ebenfalls durch Stirnschnitte definierte Breitenbereiche der Werkzeugzahnradflanken gezielt zugeordnet. Diese Zuordnung erfolgt in dem Sinne, daß für Bereiche der Werkstückzahnradflanken, bei deren Bearbeitung erhöhter Werkzeugverschleiß zu erwarten ist, ein größerer Anteil an Bearbeitungsfläche der Werkzeugzahnradflanken vorgesehen wird als für die übrigen Bereiche.

Für den Fall, daß keine Bewegung in Richtung der Werkstückachse gefahren wird, ähnelt das vorgeschlagene Verfahren dem Tauchen. Es gibt jedoch wesentliche Unterschiede zwischen beiden Verfahren. Beim Tauchen liegt Linienberührung vor, beim vorgeschlagenen Verfahren angenähert Punktberührung. Damit treten beim vorgeschlagenen Verfahren normalerweise höhere Flächenpressungen und demzufolge ein günstigeres Abtragsverhalten auf. Ferner besteht die Möglichkeit, die am Werkstück entstehende Flankenlinienmodifikation bei Verwendung eines bezüglich Flankenlinienmodifikation nicht korrekten Abrichtrades für den Tauchprozeß unter Verwendung desselben Abrichtrades mit dem neuen Verfahren einwandfrei zu gestalten, also die Verzahnungsqualität der bearbeiteten Werkstücke deutlich zu erhöhen. Schließlich ist damit zu rechnen, daß bei Anwendung des neuen Verfahrens bessere Werkstückoberflächen entstehen als beim Tauchen, weil zum Beispiel ein einzelnes vorstehendes Korn am Werkzeug, das in der Schlichtphase beim Tauchen praktisch in allen Lücken arbeitet (also auf allen Links- bzw. allen Rechtsflanken des Werkstückes) beim neuen Verfahren aufgrund der Überrollungszahlen von Werkzeug und Werkstück nur in einigen Zahnlücken Kontakt bekommt.

Das hier erläuterte Verfahren kann auch mit geringem Oszillationshub gefahren werden. Je weiter dabei auf die kollisionsgefährdete Stelle zugefahren werden soll, umso kleiner muß dann der Schwenkwinkel betragsmäßig gewählt werden.

Über eine gezielte Zuordnung von Stirnschnitten an Werkstück und Werkzeug ist es sogar möglich, praktisch ohne Bewegung des Axialschlittens (Schlitten zur Verschiebung des Werkstückes in Richtung seiner Drehachse) den Kontaktpunkt über die gesamte Breite des Werkstückes wandern zu lassen.

Bei der Ermittlung der dazu erforderlichen Bahnen geht man zum Beispiel folgendermaßen vor: Man legt über der Breite des Teilkörpers 2 eine Anzahl von Stirnschnitten fest. Diese Stirnschnitte können, müssen aber nicht, gleichen Abstand haben. Anschließend legt man dieselbe Anzahl Stirnschnitte, ähnlich über der Breite des Teilkörpers 0 verteilt, fest und ordnet die Stirnschnitte 2 den Stirnschnitten 0 so zu, daß zum Beispiel der erste (zweite, dritte, vierte ...) Stirnschnitt auf der linken Seite des Werkstückes 2 mit dem ersten (zweiten, dritten, vierten ...) Stirnschnitt des Werkzeuges, ebenfalls auf der linken Seite des Werkzeuges 0, je ein Paar bilden. Dann rechnet man für jedes dieser Paare aus, welche Bewegungen in Richtung der an der konkret betroffenen Maschine vorhandenen Achsen erforderlich sind, um den korrekten Berührpunkt zu erreichen. Sofern in Richtung der Werkstückachse eine unerwünscht große Verschiebung erforderlich ist, wird zum Beispiel auf dem Teilkörper 0 ein axial geringfügig versetzter Stirnschnitt festgelegt und die Rechnung wiederholt. Auf diese Weise läßt sich iterativ die gesuchte Zuordnung der Stirnschnitte für jedes der Stirnschnittpaare bestimmen. Für jedes der Stirnschnittpaare werden nun die erforderlichen Verschiebungen zur Ermittlung der von der Maschine auszuführenden Bahn herangezogen und in bekannter Weise zur Erstellung des NC-Programmes benutzt. Schließlich läßt sich unter Berücksichtigung der am Werkzeug aktiven Stirnschnitte eine sinnvolle Werkzeugbreite festlegen.

Das zuvor beschriebene Verfahren dient ebenfalls zum Schaben oder Schabschleifen der Zahnflanken von zylindrischen, insbesondere von flankenlinienmodifizierten Zahnrädern bzw. zum Profilieren der zum Schabschleifen benötigten Werkzeuge. Zum Bearbeiten der Werkstückzahnräder werden zahnradförmige Werkzeuge mit definierter Schneide (Schabrad) oder mit nicht definierter Schneide (Schabschleifrad, außen- oder innenverzahnt) und bei dem zum Profilieren der für das Schabschleifen benötigten Werkzeugzahnräder zahnradförmige Abrichträder eingesetzt. Werkzeug- und Werkstückzahnrad wälzen in Flankenkontakt miteinander. Die Achsen von Werkzeug- und Werkstückzahnrad werden in der Ausgangslage auf einen bestimmten Achsabstand und einen bestimmten Achskreuzwinkel eingestellt. Zwischen dem Werkstück- und dem Werkzeugzahnrad werden solche Relativbewegungen ausgeführt, daß die Werkzeugzahnradflanken die Werkstückzahnradflanken nacheinander vollständig einhüllen. Es wird bei dem beschriebenen Verfahren ein Werkzeugzahnrad, das gleiche oder eine geringere wirksame Breitenballigkeit als am Werkstückzahnrad gefordert besitzt bzw. ein Abrichtrad, das gleiche oder eine größere Breitenballigkeit als sie das innenverzahnte Werkzeugzahnrad (Schleifring) erhalten soll, eingesetzt. Die Zuordnung der Breitenbereiche von Werkzeug- und Werkstückzahnrad bzw. Abrichtrad und innenverzahntes Werkzeugzahnrad (Schleifring) wird so vorgenommen, daß für mehrere Stirnschnitte des Werkstückzahnrades bzw. des Abrichtrades iterativ Stirnschnitte des Werkzeugzahnrades bzw. des innenverzahnten Werkzeugzahnrades (Schleifring) so ermittelt werden, daß die in Richtung der Achse des Werkstückzahnrades bzw. des Abrichtrades erforderliche Verschiebung praktisch Null ist oder einen gewünschten Wert besitzt und die für die Bearbeitung - in den einzelnen Stirnschnitten des Werkstückzahnrades - bzw. die für das Abrichten - mit den durch die einzelnen Stirnschnitte des Abrichtrades - ermittelten Werte für die übrigen Achsen der Maschine als Stützpunkte für die Erstellung des Maschinensteuerprogrammes genutzt werden. Auf diese Weise werden die Breitenbereiche von Werkstückzahnrad bzw. Abrichtrad und Werkzeugzahnrad gezielt einander zugeordnet und die Breite des Werkzeugzahnrades bzw. Abrichtrades unter Berücksichtigung der Berechnung der aktiven Breite des Werkzeugzahnrades bzw. des Abrichtrades festgelegt.

## Patentansprüche

1. Verfahren zum Schaben oder Schabschleifen der Zahnflanken zylindrischer, insbesondere flankenlinienmodifizierter Zahnräder bzw. zum Profilieren der zum Schabschleifen benötigten Werkzeuge, bei dem zum Bearbeiten der Werkstückzahnräder zahnradförmige Werkzeuge mit definierter Schneide (d.h. Schabrad) oder mit nicht definierter Schneide (d.h. Schabschleifrad, außen- oder innenverzahnt) und bei dem zum Profilieren der für das Schabschleifen benötigten Werkzeugzahnräder zahnradförmige Abrichträder eingesetzt werden, wobei das Werkzeugzahnrad gleiche oder eine geringere wirksame Breitenballigkeit als am Werkstück gefordert besitzt bzw. das Abrichtrad gleiche oder eine größere wirksame Breitenballigkeit als am Werkzeugzahnrad gewünscht besitzt und wobei Werkzeugzahnrad und Werkstückzahnrad bzw. Abrichtzahnrad in Flankenkontakt miteinander wälzen und die Achsen von Werkzeugzahnrad und Werkstückzahnrad bzw. Abrichtzahnrad in der Ausgangslage auf einen bestimmten Achsabstand und einen bestimmten Achskreuzwinkel eingestellt werden und zwischen dem Werkstuckzahnrad und dem Werkzeugzahnrad Relativbewegungen ausgeführt werden, derart, daß die Werkzeugzahnradflanken die Werkstückzahnradflanken bzw. die Abrichtzahnradflanken die Werkzeugzahnradflanken aufgrund relativer Vorschubbewegungen zwischen Werkzeug und Werkstück vollständig einhüllen,
**dadurch gekennzeichnet, daß** bei Maschinen mit zwei Linearachsen und zwei Schwenkachsen bestimmten, durch Stirnschnitte definierten Breitenbereichen der Werkstück- bzw. Abrichtrad-Zahnradflanken für den Bearbeitungs- bzw. Abrichtvorgang bestimmte, ebenfalls durch Stirnschnitte definierte Breitenbereiche der Werkzeugzahnradflanken gezielt zugeordnet werden, in dem Sinne, daß auch die Werkzeugzahnradflanken von den Werkstück- bzw. die Abrichtzahnradflanken von den Werkzeugzahnradflanken vollständig eingehüllt werden.

2. Verfahren zum Schaben oder Schabschleifen der Zahnflanken zylindrischer, insbesondere flankenlinienmodifizierter Zahnräder bzw. zum Profilieren der zum Schabschleifen benötigten Werkzeuge, bei dem zum Bearbeiten der Werkstückzahnräder zahnradförmige Werkzeuge mit definierter Schneide (d.h. Schabrad) oder mit nicht definierter Schneide (d.h. Schabschleifrad, außen- oder innenverzahnt) und bei dem zum Profilieren der für das Schabschleifen benötigten Werkzeugzahnräder zahnradförmige Abrichträder eingesetzt werden, wobei das Werkzeugzahnrad gleiche oder eine geringere wirksame Breitenballigkeit als am Werkstück gefordert besitzt bzw. das Abrichtrad gleiche oder eine größere wirksame Breitenballigkeit als am Werkzeugzahnrad gewünscht besitzt und wobei Werkzeugzahnrad und Werkstückzahnrad bzw. Abrichtzahnrad in Flankenkontakt miteinander wälzen und die Achsen von Werkzeugzahnrad und Werkstückzahnrad bzw. Abrichtzahnrad in der Ausgangslage auf einen bestimmten Achsabstand und einen bestimmten Achskreuzwinkel eingestellt werden und zwischen dem Werkstückzahnrad und dem Werkzeugzahnrad Relativbewegungen ausgeführt werden, derart, daß die Werkzeugzahnradflanken und die Werkstückzahnradflanken bzw. die Abrichtzahnradflanken aufgrund relativer Vorschubbewegungen zwischen Werkzeug und Werkstück sich gegenseitig vollständig einhüllen,
**dadurch gekennzeichnet, daß** für Bereiche der Werkstückzahnflanken bzw. Abrichtzahnradflanken, bei deren Bearbeitung erhöhter Werkzeuverschleiß zu erwarten ist, ein Größerer Anteil an Bearbeitunasfläche der Werkzeugzahnradflanken vorgesehen ist als für die übrigen Bereiche, bzw. für Bereiche der Werkzeugzahnflanken, bei denen beim Abrichten erhöhter Abrichtradverschleiß zu erwarten ist, ein größerer Anteil an Bearbeitungsfläche der Abrichtradzahnflanken vorgesehen ist als für die übrigen Bereiche.

3. Verfahren nach Anspruch 1 oder 2,
**dadurch gekennzeichnet, daß** die Ermittlung der Aufteilung des zur Verfügung stehenden Schneidstoffes auf die Breitenbereiche der Werkstück- bzw. Abrichtrad-Zahnradflanken über eine Auswertung von Prozeßgrößen erfolgt.

4. Verfahren nach Anspruch 1 oder 2,
**dadurch gekennzeichnet, daß** die Auswertung während der Bearbeitung erfolgt und ggf. eine Änderung der Bewegungsbahnen des Werkstückes (1, 2) bzw. Abrichtrades relativ zum Werkzeug (0) ebenfalls während der Bearbeitung vorgenommen wird.

5. Verfahren nach Anspruch 1,
**dadurch gekennzeichnet, daß** die Zuordnung der Breitenbereiche von Werkzeug- und Werkstückzahnrad bzw. Abrichtrad und Werkzeugzahnrad so vorgenommen wird, daß für mehrere Stirnschnitte des Werkstückzahnrades bzw. des Abrichtrades Stirnschnitte des Werkzeugzahnrades so ermittelt werden, daß in Richtung der Achse des Werkstückzahnrades bzw. des Abrichtrades ein vorgegebener Hub eingehalten wird.

6. Verfahren nach Anspruch 1,
**dadurch gekennzeichnet, daß** für mehrere Stirnschnitte des Werkstückzahnrades bzw. des Abrichtrades iterativ über die gesamte Breite verteilte Stirnschnitte des Werkzeugzahnrades so ermittelt werden, daß der vorgegebene Hub praktisch Null ist.

7. Verfahren nach Anspruch 1,
**dadurch gekennzeichnet, daß** für das Arbeiten mit Oszillation der linke Teil des Werkstückzahnrades (1, 2) vom rechten Teil des Werkzeugzahnrades (0) und entsprechend der rechte Teil des Werkstückzahnrades (1, 2) vom linken Teil des Werkzeugzahnrades (0) bearbeitet wird.

## Claims

1. A method of shaving or shave-grinding the tooth flanks of cylindrical gearwheels, and in particular gearwheels with flank-line modifications, and of profiling the tools required for the shave-grinding. in which tools in the form of gearwheels with a defined cutter (*i.e.* shaving wheel) or with a non-defined cutter (*i.e.* shave-grinding wheel, toothed externally or internally) are used for machining the workpiece gearwheels and in which dressing wheels in the form of gearwheels are used for profiling the tool gearwheels required for the shave-grinding. wherein the tool gearwheel has the same or a smaller effective crowning than is required on the workpiece and the dressing wheel has the same or a larger effective crowning than is desired on the tool gearwheel, and wherein the tool gearwheel and the workpiece gearwheel or dressing gearwheel respectively roll in flank contact with each other and the axes of the tool gearwheel and the workpiece gearwheel or dressing gearwheel respectively are set to a specified axial distance and a specified axis-intersection angle in the starting position, and relative movements are performed between the workpiece gearwheel and the tool gearwheel in such a way that the flanks of the tool gearwheel completely envelop the flanks of the workpiece gearwheel and the flanks of the dressing gearwheel completely envelop the flanks of the tool gearwheel respectively as a result of relative advancing movements between the tool and the workpiece. **characterized in that**. in the case of machines with two linear axes and two pivot axes specified width regions - defined by transverse cuts - of the flanks of the workpiece or dressing-wheel gearwheel respectively for the machining or dressing procedure have specified width regions - likewise defined by transverse cuts - of the flanks of the tool gearwheel associated therewith in a desired manner in such a way that the flanks of the tool gearwheel are also completely enveloped by the flanks of the workpiece gearwheel and the flanks of the dressing gearwheel are also completely enveloped by the flanks of the tool gearwheel respectively.

2. A method of shaving or shave-grinding the tooth flanks of cylindrical gearwheels. and in particular gearwheels with flank-line modifications, and of profiling the tools required for the shave-grinding, in which tools in the form of gearwheels with a defined cutter (i.e. shaving wheel) or with a non-defined cutter (*i.e.* shave-grinding wheel, toothed externally or internally) are used for machining the workpiece gearwheels and in which dressing wheels in the form of gearwheels are used for profiling the tool gearwheels required for the shave-grinding, wherein the tool gearwheel has the same or a smaller effective crowning than is required on the workpiece and the dressing wheel has the same or a larger effective crowning than is desired on the tool gearwheel, and wherein the tool gearwheel and the workpiece gearwheel or dressing gearwheel respectively roll in flank contact with each other and the axes of the tool gearwheel and the workpiece gearwheel or dressing gearwheel respectively are set to a specified axial distance and a specified axis-intersection angle in the starting position, and relative movements are performed between the workpiece gearwheel and the tool gearwheel in such a way that the flanks of the tool gearwheel and the flanks of the workpiece gearwheel or the dressing gearwheel respectively completely envelop one another as a result of relative advancing movements between the tool and the workpiece, **characterized in that** a larger proportion of the machining area of the flanks of the tool gearwheel is provided for regions of the tooth flanks of the workpiece or dressing gearwheel respectively - in the machining of which an increased degree of tool wear is to be expected - than for the remaining regions, and a larger proportion of the machining area of the flanks of the dressing gearwheel is provided for regions of the tooth flanks of the tool - in the dressing of which an increased degree of wear of the dressing wheel is to be expected - than for the remaining regions.

3. A method according to Claim 1 or 2, **characterized in that** the distribution of the available cutting material onto the width areas of the flanks of the workpiece gearwheel or dressing-wheel gearwheel respectively is determined by way of an evaluation of process variables.

4. A method according to Claim 1 or 2, **characterized in that** the evaluation takes place during the machining, and a change in the movement paths of the workpiece (1, 2) or the dressing wheel respectively relative to the tool (0) is likewise carried out during the machining.

5. A method according to Claim 1, **characterized in that** the width areas of the tool gearwheel and the workpiece gearwheel or dressing wheel and the tool gearwheel respectively are associated in such a way that for a plurality of transverse cuts of the workpiece gearwheel or dressing wheel respectively transverse cuts of the tool gearwheel are determined so that a pre-set stroke is observed in the direction of the axis of the workpiece gearwheel or dressing wheel respectively.

6. A method according to Claim 1, **characterized in that** for a plurality of transverse cuts of the workpiece gearwheel or dressing wheel respectively transverse cuts of the tool gearwheel distributed iteratively over the entire width are determined so that the pre-set stroke is practically zero.

7. A method according to Claim 1, **characterized in that** for operation with oscillation the left-hand part of the workpiece gearwheel (1, 2) is machined by the right-hand part of the tool gearwheel (0) and in a corresponding manner the right-hand part of the workpiece gearwheel (1, 2) is machined by the left-hand part of the tool gearwheel (0).

## Revendications

1. Procédé pour le rasage ou le honage des flancs de dent de roues dentées cylindriques, en particulier des roues dentées ayant des flancs de dent modifiés, ou pour le profilage des outils nécessaires pour le honage, dans lequel on utilise, pour usiner les roues dentées des pièces à oeuvrer, des outils en forme de roue dentée à tranchant défini (c'est-à-dire roue de rasage) ou à tranchant non défini (c'est-à-dire roue de honage, à denture extérieure ou intérieure), et dans lequel on utilise, pour profiler les roues dentées de l'outil nécessaires pour le honage, des roues de dressage en forme de roue dentée, dans lequel la roue dentée de l'outil possède un bombement en largeur efficace égal ou inférieur à celui exigé sur la pièce à oeuvrer, la roue de dressage possède un bombement en largeur efficace égal ou supérieur à celui désiré sur la roue dentée de l'outil, et la roue dentée de l'outil et la roue dentée de la pièce à oeuvrer ou la roue dentée de dressage taillent en contact par les flancs l'une avec l'autre et les axes de la roue dentée de l'outil et de la roue dentée de la pièce à oeuvrer ou de la roue dentée de dressage sont réglées, dans la position de départ, avec une certaine distance entre leurs axes et un certain angle de croisement entre leurs axes, et des mouvements relatifs sont effectués entre la roue dentée de la pièce à oeuvrer et la roue dentée de l'outil, de telle sorte que les flancs de la roue dentée de l'outil enveloppent complètement les flancs de la roue dentée de la pièce à oeuvrer en raison de mouvements d'avance relatifs entre l'outil et la pièce à oeuvrer,
**caractérisé en ce que** dans des machines à deux axes linéaires et à deux axes de basculement, on associe de façon ciblée à certaines zones en largeur, définies par des coupes frontales, des flancs de la roue dentée de la pièce à oeuvrer ou de la roue de dressage, pour l'opération d'usinage ou de dressage, des zones en largeur, également définies par des coupes frontales, des flancs de la roue dentée de l'outil, dans le sens que même les flancs de la roue dentée de l'outil sont enveloppés complètement par les flancs de la roue dentée de la pièce à oeuvrer ou de la roue dentée de dressage.

2. Procédé pour le rasage ou le honage des flancs de dent de roues dentées cylindriques, en particulier des roues dentées ayant des flancs de dent modifiés, ou pour le profilage des outils nécessaires pour le honage, dans lequel on utilise, pour usiner les roues dentées des pièces à oeuvrer, des outils en forme de roue dentée à tranchant défini (c'est-à-dire roue de rasage) ou à tranchant non défini (c'est-à-dire roue de honage, à denture extérieure ou intérieure), et dans lequel on utilise, pour profiler les roues dentées de l'outil nécessaires pour le honage, des roues de dressage en forme de roue dentée, dans lequel la roue dentée de l'outil possède un bombement en largeur efficace égal ou inférieur à celui exigé sur la pièce à oeuvrer ou la roue de dressage possède un bombement en largeur efficace égal ou supérieur à celui désiré sur la roue dentée de l'outil, et la roue dentée de l'outil et la roue dentée de la pièce à oeuvrer ou la roue dentée de dressage roulent taillent en contact par les flancs l'une avec l'autre, et les axes de la roue dentée de l'outil et de la roue dentée de la pièce à oeuvrer ou de la roue dentée de dressage sont réglées, dans la position de départ, avec une certaine distance entre leurs axes et un certain angle de croisement entre leurs axes, et des mouvements relatifs sont effectués entre la roue dentée de la pièce à oeuvrer et la roue dentée de l'outil, de telle sorte que les flancs de la roue dentée de l'outil et les flancs de la roue dentée de la pièce à oeuvrer s'enveloppent mutuellement complètement en raison de mouvements d'avance relatifs entre l'outil et la pièce à oeuvrer,
**caractérisé en ce que** pour des zones des flancs de la roue dentée de la pièce à oeuvrer, à l'usinage desquelles on doit s'attendre à une usure plus élevée de l'outil, on prévoit une proportion plus grande de la surface d'usinage des flancs de la roue dentée de l'outil que pour les autres zones, ou **en ce que** pour des zones des flancs de la roue dentée de l'outil, au dressage desquelles on doit d'attendre à une usure plus élevée de la roue de dressage, on prévoit une proportion plus grande de la surface d'usinage sur les flancs de la roue dentée de dressage que pour les autres zones.

3. Procédé selon l'une ou l'autre des revendications 1 et 2, **caractérisé en ce que** la détermination de la répartition de la matière à tailler disponible sur les zones en largeur des flancs de la roue dentée de la pièce à oeuvrer ou de la roue de dressage s'effectue via une évaluation de grandeurs opératoires.

4. Procédé selon l'une ou l'autre des revendications 1 et 2, **caractérisé en ce que** l'évaluation s'effectue pendant l'usinage et une modification éventuelle des pistes de déplacement de la pièce à oeuvrer (1, 2) ou de la roue de dressage par rapport à l'outil (0) s'effectue également pendant l'usinage.

5. Procédé selon la revendication 1, **caractérisé en ce que** l'association des zones en largeur de la roue dentée de l'outil et de la pièce à oeuvrer ou de la roue de dressage et de la roue dentée de l'outil s'effectue de telle sorte que l'on détermine des coupes frontales de la roue dentée de l'outil pour plusieurs coupes frontales de la roue dentée de la pièce à oeuvrer ou de la roue de dressage, de telle sorte qu'une course prédéterminée est respectée en direction de l'axe de la roue dentée de la pièce à oeuvrer ou de la roue de dressage.

6. Procédé selon la revendication 1, **caractérisé en ce que** pour plusieurs coupes frontales de la roue dentée de la pièce à oeuvrer ou de la roue de dressage, on détermine de façon itérative des coupes frontales, réparties sur toute la largeur, de la roue dentée de la pièce à oeuvrer, de telle sorte que la course prédéterminée est pratiquement nulle.

7. Procédé selon la revendication 1, **caractérisé en ce que** pour l'usinage avec oscillation, la partie de gauche de la roue dentée de la pièce à oeuvrer (1, 2) est usinée par la partie de droite de la roue dentée de l'outil (0) et en correspondance la partie de droite de la roue dentée de la pièce à oeuvrer (1, 2) est usinée par la partie de gauche de la roue dentée de l'outil (0).
